# EUROPEAN PATENT SPECIFICATION

(11) **EP 3 388 292 B1**
(45) Date of publication and mention of the grant of the patent: **09.06.2021**
(21) Application number: 18166091.1
(22) Date of filing: 06.04.2018
(51) Int. Cl.: B60R 25/25

(54) **DRIVER AUTHENTICATION SYSTEM**
FAHRERAUTHENTIFIZIERUNGSSYSTEM
SYSTÈME D'AUTHENTIFICATION DU CONDUCTEUR

(30) Priority: 12.04.2017 GB 201705892
(43) Date of publication of application: 17.10.2018
(73) Proprietor: Biostart Security Limited, Gloucester GL1 5TL (GB)
(72) Inventor: POPE, Kevin, Gloucester, GL1 5TL (GB)
(74) Representative: Cordy, Nicole Jessica

(56) References cited:
- WO-A2-2007/106875
- DE-A1-102015 000 479
- DE-A1-102015 201 447
- US-A1- 2011 068 895

## Description

### Introduction

The present invention relates to driver authentication systems and methods for use in vehicles, such as in a car, motorbike, van, lorry, etc.

Vehicle theft is a common problem which is very disruptive and costly to transportation industries, including taxi firms, logistics companies, public transport and delivery services. Traditionally, any person with the correct key can drive a vehicle, thus an unauthorised user only has to obtain the key in order to steal the vehicle.

It is known for more modern vehicles to comprise additional security measures which make it more difficult for unauthorised users to drive a car. For example, it is known to provide a driver authentication system such as a security pin code or biometric scanner which verifies the identity of the driver. However, these known security systems are generally only activated when the vehicle ignition is started. Therefore, vehicles are often still prone to theft whilst the engine is left idling. In addition, many known driver authentication systems are relatively easy to bypass or disable.

A known biometric authentication system for controlling access to a vehicle is disclosed in WO2007/106875.

Misuse of company vehicles is also a problem for employers. For example, employees often use company vehicles for unauthorised personal use, or an ex-employee can take or refuse to return a vehicle. There is therefore a need for an authentication system which allows a company to easily control who is authorised to drive each of a fleet of vehicles at a given time.

The present invention seeks to address some or all of these problems.

### Summary of the Invention

In a first aspect of the invention, there is provided a driver authentication system for a vehicle, as defined in appended claim 1. The authentication system comprises:
a biometric reader for receiving biometric data from a driver;
a communication unit enabling communication between a remote server storing authorised biometric data and the biometric reader; and
a controller configured to prevent the vehicle being driven until it receives an authentication signal confirming that the driver's input biometric data matches the authorised biometric data.

Thus, the system of the present invention may not store authorised biometric data in the vehicle itself (i.e. locally), instead it is stored on a remote server. This means that the system is more secure, as even if the vehicle is stolen the authorised biometric data cannot be accessed.

In addition, if the authorised biometric data needs to be changed, for example to add an additional authorised driver, or remove an authorised driver, then the database can be updated from any remote location. This does not required any hardware in the vehicle to be updated, which is more convenient for the user.

In some embodiments, the biometric reader is configured to store authorised biometric data transmitted by the remote server.

The communication unit may be configured to receive authorised biometric data and/or signals from the remote sever.

Optionally, the biometric reader may output the authentication signal. In other embodiments, the remote server may output the authentication signal.

The communication unit may communicate periodically with the remote server to update the authorised biometric data stored on the biometric reader. Thus, the data stored on the biometric reader may update periodically.

Optionally, the communication unit may be in continuous communication with the remote server, such that data stored on the biometric reader is automatically updated in response to an item of biometric data being added to or removed from the database of authorised drivers.

Optionally, the server may be configured to encrypt the biometric data stored on the database. The database may store templates of the authorised biometric data, rather than the biometric data itself. For example, the database can store the key identifiers of the biometric data, such as the location of certain features of an authorised fingerprint.

The communication unit may be configured to transmit information to the remote server. Thus, there may be two-way communication between the remote server and the vehicle (i.e. the communication unit). The information may include biometric data.

Optionally, signals transmitted between the communication unit and the remote server may be secured or encrypted. This improves the security of the system.

Optionally, the database may contain biometric data for persons authorised to drive a plurality of vehicles. Thus, a single authentication system can be used to control a plurality of vehicles. This is particularly beneficial for commercial vehicles, as a company can control who is authorised to drive each of their vehicles from a remote location, without having to update the data stored on each vehicle individually.

The biometric data may be one or more of: fingerprints; facial recognition; iris and/or retina scans; and/or voice recognition.

The controller is configured to prevent the vehicle ignition from starting the engine unless an authentication signal has been received from the biometric reader. For example, if a driver inserts a key into the ignition turning the key will not start the engine unless the driver's biometric data has been authenticated.

In some embodiments, in response to receiving an authentication signal, the controller may automatically start the vehicle engine.

The system includes a sensor unit. The sensor unit is configured to determine whether the driver has left the vehicle. Additionally, the sensor unit may be configured to determine how long the vehicle has been idling.

The controller is configured to disable (i.e. turn off) the engine if the sensor unit determines that the driver has left the vehicle. Additionally, the controller may be configured to disable the engine if the sensor unit determines that the vehicle has been idling for a certain amount of time.

The sensor unit comprises a door sensor and a seat pressure sensor. The door sensor may be a switch which is closed when the door is in a closed position, such that if the driver opens the door to exit the vehicle the switch moves to an open position. The seat pressure sensor may be any type of pressure sensor arranged to detect when the driver is sat in the vehicle seat.

Optionally, the seat pressure sensor may comprise a switch which is in an open position when the driver seat is empty and moves to a closed position when the driver sits on the seat.

When one or more of the door switch and/or seat switch is in an open position the controller may disable the vehicle engine.

Optionally, the system may include a display device. When the controller has disabled the engine, such that the vehicle is in an inactive mode, the display device may display a message prompting the driver to enter their biometric data.

If the driver's biometric data is authenticated then the display device may display a confirmation message. The confirmation message may inform the user that they can start the vehicle engine.

Optionally, the display device may be an LCD screen. The display device may be integrated into a dashboard of the vehicle.

In some embodiments, the system may include a tracker configured to track the location of the vehicle. The tracker may be a GPS tracker.

Optionally, the tracker may be configured to transmit the location of the vehicle to the remote server, and/or to a specified remote location.

In some embodiments, the tracker may continuously transmit the location of the vehicle. Optionally, the tracker may transmit the location of the vehicle at specified intervals of time, for example every 10 minutes, or every hour. Optionally, the tracker may only transmit the location of the vehicle when the vehicle enters the inactive mode (i.e. when the controller has disabled the engine).

The system may enter a power-saving mode if the sensor unit is not activated within a predetermined amount of time.

Optionally, the system may include an override switch, wherein, when activated, the override switch deactivates or bypasses the controller. The override switch may be activated by the remote server.

In a second aspect of the invention, there is provided a vehicle comprising the driver authentication system of the first aspect of the invention.

Optionally, the vehicle may be a car, van, lorry, motorbike, moped, or boat.

In a third aspect of the invention, there is provided a method of preventing unauthorised use of a vehicle as defined in the appended claims. The method comprises:
preventing a driver from starting the vehicle, such that the vehicle is in an disabled mode;
obtaining biometric data from the driver using a biometric reader;
determining whether the biometric data belongs to an authorised driver by comparing the input biometric data to the authorised biometric data stored on a remote server; and
if the driver is authorised, transmitting an authentication signal to a controller and enabling the vehicle to be started.

The technical advantages of the third aspect of the invention are as described in relation to the first aspect of the invention.

The method may include transmitting the driver's biometric data to the remote server. The step of determining whether the biometric data belongs to an authorised driver may be conducted by or at the remote server.

The method may include the step of transmitting authorised biometric data from the remote server to the biometric reader. Thus, the step of determining whether the driver is authorised may be conducted by the biometric reader. The authorised biometric data may not be stored on the biometric reader after it has been used in the authentication process.

Optionally, the method may include the step of starting the vehicle engine if the driver is authorised.

In some embodiments, the method may include transmitting the authentication signal to the remote server.

Optionally, the method may include transmitting a signal to the remote server when data is input into the biometric reader. This may allow a remote user to monitor when a vehicle is in use, or when an authentication attempt has been made.

The method may include displaying a message on a display device located in the vehicle prompting the driver to input their biometric data.

Optionally, the method may include displaying a confirmation message on the display device if the driver's input biometric data matches the authorised biometric data. The confirmation message may inform the user that they can start the vehicle engine.

In some embodiments, if the driver is not authorised, then no action may be taken and the vehicle remains in the disabled mode.

Optionally, if the driver is not authorised then the method may include displaying a message on a display device in the vehicle prompting the user to try again to re-enter their biometric data.

Optionally, the method may include activating an alarm if the biometric reader receives unauthorised biometric data three times within a given time period.

Optionally, the method may include preventing the driver from entering any biometric data for a given period of time in response to the biometric reader receiving unauthenticated biometric data three times within a given time period.

Optionally, the method may include storing the authorised biometric data transmitted by the remote server in the biometric reader.

Optionally, the method may include updating the database on the remote server to control which drivers are authorised to drive a given vehicle at a given time.

The method may include remotely removing and/or adding an authorised driver to/from the database. This may conveniently allow a company to remotely manage who is authorised to drive each of a plurality of company vehicles in real time.

The method may including updating the authorised data stored in the biometric reader by communicating with the remote server. Optionally, the biometric reader may be updated periodically by communicating with the remote server at predetermined times or time intervals. Optionally, the biometric reader may be in continuous communication with the remote server.

The method may further include tracking the location of the vehicle. Optionally, the method may include transmitting the location of the vehicle to the remote server.

In some embodiments, the location of the vehicle may be transmitted at predetermined intervals of time. Optionally, the location of the vehicle may be continuously transmitted to the remote server and/or another remote location.

Optionally, the remote server and/or the biometric reader may store the driver ID together with each authorised biometric data entry. The driver ID may include the name of the driver and one or more of: their address; telephone number; photograph; and/or date of birth.

The method may include transmitting the driver ID from the remote server to the vehicle if the driver is authorised. The method may include displaying the driver ID on the display device.

The method may include recording the time of each authentication attempt (i.e. when biometric data is input in the biometric reader). This may be done by the remote server or by the vehicle, or both.

The method includes determining whether the driver has left the vehicle. The method further includes disabling the vehicle engine if it has been determined that the driver has left the vehicle.

The step of determining whether the driver has left the vehicle includes: detecting whether the vehicle door has been opened (i.e. the driver's door); and detecting whether the driver is sat in the driver's seat.

Optionally, the method may include detecting how long the vehicle has been idling. The method may further include disabling the vehicle engine if it has been determined that the vehicle has been idling for a predetermined amount of time.

The method may include entering a power-saving mode if no driver activity is detected within a predetermined amount of time.

### Detailed Description

Illustrative embodiments of the invention will now be described with reference to the accompanying drawings, in which:

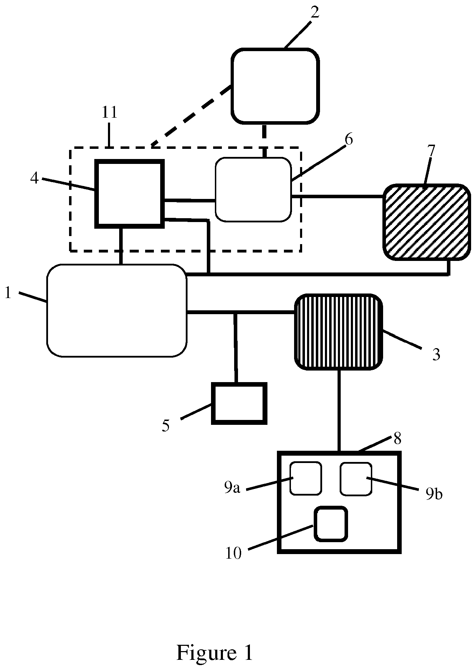

**Figure 1** shows a schematic illustration of a driver authentication system according to the present invention.

Figure 1 shows an example of a driver authentication system of the present invention for disposal in a vehicle. The system comprises a biometric reader 1 configured to scan a driver's fingerprints. The biometric reader 1 is in communication with a controller 3 and a communication unit 4.

The controller 3 is in communication with the vehicle engine and/or the vehicle ignition.

In this example, the communication unit 4 is combined with a vehicle tracker 6 in a single device 11. The vehicle tracker 6 monitors the position of the vehicle and the device 11 outputs this to the remote server 2. A suitable device is the Teltonika FM1125 ™.

The device 11 is in wireless communication with a remote server 2, wherein there is a two-way data link between the communication unit 4 and the remote server 2. The remote server 2 comprises a database which stores the fingerprint data of authorised drivers of a plurality of vehicles owned by a user, including the vehicle in which the system is disposed.

The remote server 2 transmits authorised fingerprint data to the device 11. The authorised fingerprint data is then stored in the biometric reader 1.

The controller 3 is configured to prevent the vehicle from being driven until the driver's identity has been authenticated by the biometric reader 1. The vehicle is therefore initially in a disabled mode.

To start the vehicle, the driver must input their fingerprints into the biometric reader 1. The biometric reader 1 compares the driver's fingerprints to the authorised fingerprint data received from the remote sever 2.

If there is a match between the driver's input fingerprint and the authorised fingerprint data then the biometric reader 1 outputs an authentication signal to the controller 3. The controller 3 then moves the vehicles into an active mode, wherein the driver can start the vehicle engine (i.e. by turning the key in the ignition).

A display device 7 is also provided, which in this example is a screen integrated into the vehicle dashboard (or control panel). The display device 7 also comprises a user interface. The display device 7 is in communication with the device 11 including the communication unit 4 and the tracker 6 and the biometric reader 1.

A sensor unit 8 is communication with the controller 3. The sensor unit 8 comprises two door switches 9a, 9b and a pressure seat switch 10. Each door switch 9a, 9b is connected to a respective door of the vehicle and the pressure seat switch is disposed in the driver's seat of the vehicle.

The sensor unit 8 detects whether the driver has left the vehicle. In particular, the door switches 9a, 9b move to an open position when their associated door is opened, suggesting that the driver may have left the vehicle, and the seat pressure sensor moves to an open position if the driver in not sat in the driver's seat.

If any of the switches 9a, 9b, 10 in the sensor unit 8 are in the open position then the controller 3 is configured to disable the vehicle engine. The driver will then be required to input their fingerprints in order to reactive the vehicle.

An override switch 5 is provided between the biometric unit 1 and the controller, wherein, when activated, the override switch 5 deactivates or bypasses the controller 3. The override switch 5 can be activated by the remote server 2.

Power is provided to the system from the unswitched vehicle supply. The tracker 6 may be supplied with power separately via its own connector.

The system initially starts in a low power state, with the biometric reader 1, display device 7, controller 3 and sensor unit 8 powered down and the device 11 set to consume minimal power. Any change of state at either the door switch or the seat pressure switch, any key press on the display unit, or the insertion / attempted turning of a key in the ignition will cause the vehicle unit to wake up, powering up the system, but not enabling the vehicle engine.

While the engine is disabled, any period of inactivity exceeding a predetermined amount of time, such as 5 minutes, will cause the system to return to the low power state. While the engine is enabled, the system will remain awake.

Once it has woken up, the controller 3 will check that the vehicle doors are closed (via the door switches 9a, 9b) and that the driver seat is occupied (via the driver seat switch 10), or that these switches are all short circuit. If so then a message is displayed on the display device 7 asking the user to scan their fingerprint. If no data is received then the system returns to the low power state.

When the user presents a fingerprint, this is read by the biometric reader 1 and authenticated against its internal database.

If the fingerprint is successfully authenticated then the vehicle engine is enabled. If not then the user is given two more chances to scan their fingerprint for authentication, guided by messages displayed on the display unit 7. If a fingerprint is not authenticated after three attempts then the system returns to the low power state.

Following successful fingerprint authentication the display unit 7 displays a confirmation message and the controller closes the Engine Start and both Engine Run switches to close their respective circuits, allowing the engine to start and run when the ignition key is subsequently turned.

At any time, if the sensor unit 8 detects that a door has been opened or that the driver seat is unoccupied via a change of state at one of the switch inputs 9a, 9b, 10 then the engine is cut by opening the Engine Start and both Engine Run switches. The display device 7 displays a message indicating a forced engine cut for the duration of a predetermined timeout (such as 5 minutes).

The device 11 allows two-way communication between the remote server 2 and the vehicle based on a data packet messaging protocol. This protocol must enable command and status information, and any associated data, to be passed between the remote server 2 and the device 11 in a reliable and secure way. All messages sent by one component must be acknowledged by the other, with a resend mechanism provided to handle missing messages.

Communications with each device 11 is conducted separately by the remote server 2 but it is possible for users to manage Groups of vehicles using the same remote server 2.

The system will also wake from the lower power state whenever a message is sent to the device 11.

The remote server 2 can send messages to the device 11 to select one of three system modes, normal, admin or override. Whichever system mode is selected remains set (even across a power cycle) until it is changed by the remote server via the device 11.

### Normal Mode

When in normal mode, the system operates as described above.

In addition, following successful fingerprint authentication, the device 11 will send a message to the remote server 2 indicating the Driver ID for the fingerprint that was successfully authenticated.

### Admin Mode

Admin mode is used to add and delete fingerprints to / from the biometric reader 1 of a given vehicle.

Once it has woken up in admin mode, the device 11 communicates with the remote server 2 to determine whether fingerprints are to be added or deleted from the biometric reader 1. It is possible to add or delete multiple fingerprints once in admin mode, but each add or delete action is a separate operation.

To add a fingerprint, messages between the remote server 2 and the device 11 will send the fingerprint data record and the associated Driver ID to the biometric reader 1. The fingerprint data is stored in a free slot in the biometric reader's database and this slot is associated with the Driver ID. Success / failure is then confirmed by subsequent messages.

To delete a fingerprint, messages between the remote server 2 and the device 11 will specify the Driver ID, and all slots in the biometric reader's database which are associated with this Driver ID will be deleted. Success / failure is then confirmed by subsequent messages.

### Override Mode

Override mode is used to disable vehicle protection in the same way as the override switch 5.

The device 11 will send a message to the remote server 11 indicating the state of the override switch 5 whenever the switch state changes.

When override mode is selected, the display device 7 displays a confirmation message but no other functions operate, and after a predetermined timeout, such as 5 minutes, the system returns to the low power state. If the system subsequently wakes for any reason other than to exit override mode, the confirmation message is displayed again for a further 5 minutes.

### Capturing Fingerprints

The fingerprints stored by the biometric reader 1 are managed exclusively by the remote server 2. These fingerprints need to be captured locally and then communicated to the remote server 2 for onward distribution to the vehicle(s).

Fingerprints may be captured using the biometric reader 1 connected via USB to a PC running a Fingerprint Capture Application. When used in this way, the biometric reader 1 will be disconnected from the device 11 and used exclusively for the purpose of fingerprint capture.

When the USB PC Connection is made and the biometric reader 1 is operating in Fingerprint Capture Mode, all other functionality is disabled and all stored fingerprints are deleted. The display device 7 will display messages guiding the user through the process of scanning a fingerprint until one is successfully captured by the fingerprint reader or the process aborts. During the capture process the fingerprint is temporarily stored in a specific fingerprint reader slot in the biometric reader 1 that is dedicated to this purpose.

Application software is needed to collect fingerprint data records from a biometric reader 1 operating in Fingerprint Capture Mode and communicate these records to the remote server 2.

The Fingerprint Capture Application must communicate with the biometric reader 1 to capture fingerprint data records and must also provide a user interface to capture the associated user data (driver name, Driver ID). The complete dataset, user data plus a single fingerprint, are then uploaded by the Application to the remote server 2 where the data is stored and managed.

The Fingerprint Capture Application should preferably be compatible with Windows XP, 7, 8 and 10.

The system should preferably be compatible with 12V and 24V commercial vehicle electrical power supply systems, operating from the battery alone and during engine charging.

In its low power state, the system, excluding the tracker 6 and the remote server 2, should preferably consume no more than 100mW. When woken, it should preferably consume no more than 5W.

The system should preferably comply with the relevant parts of the following standards:
- EN50498
   Electromagnetic compatibility (EMC). Product family standard for aftermarket electronic equipment in vehicles.
- EN55012
   Vehicles, boats and internal combustion engines. Radio disturbance characteristics. Limits and methods of measurement for the protection of off-board receivers.
- EN61000 -6-2 and -6-3
   Electromagnetic compatibility (EMC). Generic standards.

## Claims

1. A driver authentication system for a vehicle, comprising:
a biometric reader (1) for receiving biometric data from a driver;
a communication unit (4) enabling communication between a remote server (2) storing authorised biometric data and the biometric reader (1);
a sensor unit (8) configured to determine whether the driver has left the vehicle, wherein the sensor unit (8) comprises a door sensor (9a, 9b) and a seat pressure sensor (10); and
a controller (3) configured to prevent the vehicle ignition from starting the engine until it receives an authentication signal confirming that the driver's input biometric data matches the authorised biometric data, wherein the controller (3) is configured to disable the vehicle engine if the sensor unit (8) determines that the driver has left the vehicle.

2. The driver authentication system of claim 1, wherein:
the biometric reader (1) is configured to output the authentication signal; and/or
the biometric reader (1) is configured to store authorised biometric data transmitted by the remote server (2).

3. The driver authentication system of any preceding claim, wherein the database on the remote server (2) contains biometric data for persons authorised to drive a plurality of vehicles.

4. The driver authentication system of any preceding claim, wherein the biometric data is one or more of: fingerprints; facial recognition; iris and/or retina scans; and/or voice recognition.

5. The driver authentication system of any preceding claim,
wherein the controller (3) is configured to automatically start the vehicle engine in response to receiving an authentication signal.

6. The driver authentication system of any preceding claim, wherein the sensor unit (8) is further configured to determine how long the vehicle has been idling, and wherein the controller (3) is configured to disable the vehicle engine if the sensor unit (8) determines that the vehicle has been idling for a predetermined amount of time.

7. The driver authentication system of any preceding claim, further comprising:
a display device (7) disposed in the vehicle; and/or
a tracker (6) configured to track the location of the vehicle, wherein the tracker (6) is configured to transmit the location of the vehicle to the remote server (2) and/or to a specified remote location.

8. The driver authentication system of any preceding claim, further comprising:
an override switch (5), wherein, when activated, the override switch (5) deactivates or bypasses the controller (3), wherein the override switch (5) is configured to be activated by the remote server (2).

9. A vehicle comprising the driver authentication system of any preceding claim.

10. A method of preventing unauthorised use of a vehicle, comprising:
preventing a driver from starting the vehicle, such that the vehicle is in a disabled mode;
obtaining biometric data from the driver using a biometric reader (1);
determining whether the biometric data belongs to an authorised driver by comparing the input biometric data to authorised biometric data stored in a remote server (2);
if the driver is authorised, transmitting an authentication signal to a controller (3) and enabling the vehicle to be started; and
determining whether the driver has left the vehicle and disabling the vehicle engine if it has been determined that the driver has left the vehicle,
wherein the step of determining whether the driver has left the vehicle includes: detecting whether a vehicle door has been opened and detecting whether the driver is sat in the driver's seat.

11. The method of claim 10, further comprising:
transmitting the authorised biometric data from the remote server (2) to the biometric reader (1), such that the step of determining whether the driver is authorised is conducted by the biometric reader (1); and/or
updating the database on the remote server (2) to control which drivers are authorised to drive a given vehicle at a given time, including remotely removing and/or adding an authorised driver to/from the database.

12. The method of claim 10 or claim 11, further comprising starting the vehicle engine if the driver is authorised.

13. The method of any of claims 10 to 12, including:
storing the authorised biometric data for drivers authorised to drive a given vehicle on the biometric reader (1) and updating the stored authorised biometric data by communicating with the remote server (2), wherein the biometric reader communicates with the remote server at predetermined times or time intervals or the biometric reader is in continuous communication with the remote server

14. The method of any of claims 10 to 13, including:
tracking the location of the vehicle and transmitting the location of the vehicle to the remote server and/or a specified remote location, wherein the location of the vehicle is transmitted continuously or at predetermined times or intervals of time.

15. The method of any of claims 10 to 14, including:
detecting how long the vehicle has been idling and disabling the vehicle engine if it has been determined that the vehicle has been idling for a predetermined amount of time.

## Patentansprüche

1. Fahrerauthentifizierungssystem für ein Fahrzeug, das Folgendes umfasst:
einen biometrischen Leser (1) zum Empfangen von biometrischen Daten von einem Fahrer;
eine Kommunikationseinheit (4), die eine Kommunikation zwischen einem entfernten Server (2), der autorisierte biometrische Daten speichert, und dem biometrischen Leser (1) freigibt;
eine Sensoreinheit (8), die konfiguriert ist, zu bestimmen, ob der Fahrer das Fahrzeug verlassen hat, wobei die Sensoreinheit (8) einen Türsensor (9a, 9b) und einen Sitzdrucksensor (10) umfasst; und
eine Steuereinheit (3), die konfiguriert ist, zu verhindern, dass die Fahrzeugzündung den Motor startet, bis sie ein Authentifizierungssignal empfängt, das bestätigt, dass die eingegebenen biometrischen Daten des Fahrers mit den autorisierten biometrischen Daten übereinstimmen, wobei die Steuereinheit (3) konfiguriert ist, den Fahrzeugmotor zu sperren, falls die Sensoreinheit (8) bestimmt, dass der Fahrer das Fahrzeug verlassen hat.

2. Fahrerauthentifizierungssystem nach Anspruch 1, wobei:
der biometrische Leser (1) konfiguriert ist, das Authentifizierungssignal auszugeben; und/oder der biometrische Leser (1) konfiguriert ist, autorisierte biometrische Daten, die von dem entfernten Server (2) übertragen werden, zu speichern.

3. Fahrerauthentifizierungssystem nach einem vorhergehenden Anspruch, wobei die Datenbank auf dem entfernten Server (2) biometrische Daten für Personen enthält, die zum Fahren einer Vielzahl von Fahrzeugen autorisiert sind.

4. Fahrerauthentifizierungssystem nach einem vorhergehenden Anspruch, wobei die biometrischen Daten eines oder mehrere von Folgendem sind: Fingerabdrücke; Gesichtserkennung; Iris- und/oder Retinascans; und/oder Spracherkennung.

5. Fahrerauthentifizierungssystem nach einem vorhergehenden Anspruch,
wobei die Steuereinheit (3) konfiguriert ist, den Fahrzeugmotor als Reaktion auf das Empfangen eines Authentifizierungssignals automatisch zu starten.

6. Fahrerauthentifizierungssystem nach einem vorhergehenden Anspruch, wobei die Sensoreinheit (8) ferner konfiguriert ist, zu bestimmen, wie lange das Fahrzeug im Leerlauf war, und wobei die Steuereinheit (3) konfiguriert ist, den Fahrzeugmotor zu sperren, falls die Sensoreinheit (8) bestimmt, dass das Fahrzeug über einen vorher festgelegten Zeitraum im Leerlauf war.

7. Fahrerauthentifizierungssystem nach einem vorhergehenden Anspruch, das ferner Folgendes umfasst:
eine Anzeigevorrichtung (7), die in dem Fahrzeug angeordnet ist; und/oder
eine Verfolgungseinheit (6), die konfiguriert ist, den Standort des Fahrzeugs zu verfolgen, wobei die Verfolgungseinheit (6) konfiguriert ist, den Standort des Fahrzeugs an den entfernten Server (2) und/oder an einen vorgegebenen entfernten Standort zu übertragen.

8. Fahrerauthentifizierungssystem nach einem vorhergehenden Anspruch, das ferner Folgendes umfasst:
einen Übersteuerungsschalter (5), wobei, wenn aktiviert, der Übersteuerungsschalter (5) die Steuereinheit (3) deaktiviert oder umgeht, wobei der Übersteuerungsschalter (5) konfiguriert ist, durch den entfernten Server (2) aktiviert zu werden.

9. Fahrzeug, das das Fahrerauthentifizierungssystem nach einem vorhergehenden Anspruch umfasst.

10. Verfahren zum Verhindern einer unautorisierten Verwendung eines Fahrzeugs, das Folgendes umfasst:
Verhindern, dass ein Fahrer das Fahrzeug startet, sodass das Fahrzeug in einem deaktivierten Modus ist;
Erhalten von biometrischen Daten von dem Fahrer unter Verwendung eines biometrischen Lesers (1);
Bestimmen, ob die biometrischen Daten zu einem autorisierten Fahrer gehören, durch Vergleichen der eingegebenen biometrischen Daten mit autorisierten biometrischen Daten, die in einem entfernten Server (2) gespeichert sind;
falls der Fahrer autorisiert ist, Übertragen eines Authentifizierungssignals an eine Steuereinheit (3) und Freigeben des Fahrzeugs, das gestartet werden soll; und
Bestimmen, ob der Fahrer das Fahrzeug verlassen hat, und Sperren des Fahrzeugmotors, falls bestimmt wird, dass der Fahrer das Fahrzeug verlassen hat,
wobei der Schritt des Bestimmens, ob der Fahrer das Fahrzeug verlassen hat, Folgendes beinhaltet:
Detektieren, ob eine Fahrzeugtür geöffnet wurde, und
Detektieren, ob der Fahrer in dem Fahrersitz sitzt.

11. Verfahren nach Anspruch 10, das ferner Folgendes umfasst:
Übertragen der autorisierten biometrischen Daten von dem entfernten Server (2) an den biometrischen Leser (1), sodass der Schritt des Bestimmens, ob der Fahrer autorisiert ist, durch den biometrischen Leser (1) ausgeführt wird; und/oder
Aktualisieren der Datenbank auf dem entfernten Server (2), um zu steuern, welche Fahrer zum Fahren eines gegebenen Fahrzeugs zu einem gegebenen Zeitpunkt autorisiert sind, einschließlich Entfernen und/oder Hinzufügen eines autorisierten Fahrers zu/von der Datenbank aus der Ferne.

12. Verfahren nach Anspruch 10 oder Anspruch 11, das ferner das Starten des Fahrzeugmotors umfasst, falls der Fahrer autorisiert ist.

13. Verfahren nach einem der Ansprüche 10 bis 12, das Folgendes beinhaltet:
Speichern der autorisierten biometrischen Daten für Fahrer, die zum Fahren eines gegebenen Fahrzeugs autorisiert sind, auf dem biometrischen Leser (1) und Aktualisieren der gespeicherten autorisierten biometrischen Daten durch Kommunizieren mit dem entfernten Server (2), wobei der biometrische Leser mit dem entfernten Server zu vorher festgelegten Zeitpunkten oder in vorher festgelegten Zeitintervallen kommuniziert oder der biometrische Leser mit dem entfernten Server in kontinuierlicher Kommunikation ist.

14. Verfahren nach einem der Ansprüche 10 bis 13, das Folgendes beinhaltet:
Verfolgen des Standorts des Fahrzeugs und Übertragen des Standorts des Fahrzeugs an den entfernten Server und/oder an einen vorgegebenen entfernten Standort, wobei der Standort des Fahrzeugs kontinuierlich oder zu vorher festgelegten Zeitpunkten oder in vorher festgelegten Zeitintervallen übertragen wird.

15. Verfahren nach einem der Ansprüche 10 bis 14, das Folgendes beinhaltet:
Detektieren, wie lange das Fahrzeug im Leerlauf war, und Sperren des Fahrzeugmotors, falls bestimmt wurde, dass das Fahrzeug über einen vorher festgelegten Zeitraum im Leerlauf war.

## Revendications

1. Système d'authentification de conducteur pour un véhicule, comprenant :
un lecteur biométrique (1) pour recevoir des données biométriques en provenance d'un conducteur ;
une unité de communication (4) permettant une communication entre un serveur distant (2) stockant des données biométriques autorisées et le lecteur biométrique (1) ;
une unité de détection (8) configurée pour déterminer si le conducteur a quitté le véhicule, l'unité de détection (8) comprenant un capteur de portière (9a, 9b) et un capteur de pression de siège (10) ; et
un organe de commande (3) configuré pour empêcher l'allumage de véhicule de démarrer le moteur jusqu'au moment où il reçoit un signal d'authentification confirmant que les données biométriques d'entrée de conducteur concordent avec les données biométriques autorisées, l'organe de commande (3) étant configuré pour invalider le moteur de véhicule si l'unité de détection (8) détermine que le conducteur a quitté le véhicule.

2. Système d'authentification de conducteur de la revendication 1, dans lequel :
le lecteur biométrique (1) est configuré pour délivrer en sortie le signal d'authentification ; et/ou
le lecteur biométrique (1) est configuré pour stocker des données biométriques autorisées transmises par le serveur distant (2).

3. Système d'authentification de conducteur de n'importe quelle revendication précédente, dans lequel la base de données sur le serveur distant (2) contient des données biométriques pour des personnes autorisées à conduire une pluralité de véhicules.

4. Système d'authentification de conducteur de n'importe quelle revendication précédente, dans lequel les données biométriques sont un ou plusieurs éléments parmi :
empreintes digitales ; reconnaissance faciale ; scannages de l'iris et/ou de la rétine ; et/ou reconnaissance vocale.

5. Système d'authentification de conducteur de n'importe quelle revendication précédente,
dans lequel l'organe de commande (3) est configuré pour démarrer automatiquement le moteur de véhicule en réaction à la réception d'un signal d'authentification.

6. Système d'authentification de conducteur de n'importe quelle revendication précédente, dans lequel l'unité de détection (8) est configurée en outre pour déterminer la durée pendant laquelle le véhicule a tourné au ralenti, et dans lequel l'organe de commande (3) est configuré pour invalider le moteur de véhicule si l'unité de détection (8) a déterminé le fait que le véhicule a tourné au ralenti pendant une quantité de temps prédéterminée.

7. Système d'authentification de conducteur de n'importe quelle revendication précédente, comprenant en outre :
un dispositif d'affichage (7) disposé dans le véhicule ; et/ou
un dispositif de suivi (6) configuré pour suivre la localisation du véhicule, le dispositif de suivi (6) étant configuré pour transmettre la localisation du véhicule au serveur distant (2) et/ou à une localisation distante spécifiée.

8. Système d'authentification de conducteur de n'importe quelle revendication précédente, comprenant en outre :
un commutateur de surpassement (5), lorsqu'il est activé, le commutateur de surpassement (5) désactivant ou contournant l'organe de commande (3), le commutateur de surpassement (5) étant configuré pour être activé par le serveur distant (2).

9. Véhicule comprenant le système d'authentification de conducteur de n'importe quelle revendication précédente.

10. Procédé permettant d'empêcher une utilisation non autorisée d'un véhicule, comprenant :
l'empêchement pour un conducteur de démarrer le véhicule, de telle sorte que le véhicule se trouve dans un mode invalidé ;
l'obtention de données biométriques à partir du conducteur grâce à l'utilisation d'un lecteur biométrique (1) ;
la détermination pour savoir si les données biométriques appartiennent à un conducteur autorisé grâce à la comparaison des données biométriques d'entrée à des données biométriques autorisées stockées dans un serveur distant (2) ;
si le conducteur est autorisé, la transmission d'un signal d'authentification à un organe de commande (3) et la validation d'un démarrage du véhicule ; et
la détermination pour savoir si le conducteur a quitté le véhicule et l'invalidation du moteur de véhicule s'il a été déterminé que le conducteur a quitté le véhicule,
dans lequel l'étape de détermination pour savoir si le conducteur a quitté le véhicule inclut :
la détection pour savoir si une portière de véhicule a été ouverte et la détection pour savoir si le conducteur est assis dans le siège du conducteur.

11. Procédé de la revendication 10, comprenant en outre :
la transmission des données biométriques autorisées à partir du serveur distant (2) jusqu'au lecteur biométrique (1), de telle sorte que l'étape de détermination pour savoir si le conducteur est autorisé soit entreprise par le lecteur biométrique (1) ; et/ou
la mise à jour de la base de données sur le serveur distant (2) afin de contrôler quels conducteurs sont autorisés à conduire un véhicule donné à un moment donné, incluant l'élimination et/ou l'ajout à distance d'un conducteur autorisé à/de la base de données.

12. Procédé de la revendication 10 ou de la revendication 11, comprenant en outre le démarrage du moteur de véhicule si le conducteur est autorisé.

13. Procédé de n'importe lesquelles des revendications 10 à 12, incluant :
le stockage des données biométriques autorisées pour des conducteurs autorisés à conduire un véhicule donné sur le lecteur biométrique (1) et la mise à jour des données biométriques autorisées stockées grâce à une communication avec le serveur distant (2), dans lequel le lecteur biométrique communique avec le serveur distant à des moments ou des intervalles de temps prédéterminés ou le lecteur biométrique est en communication continue avec le serveur distant.

14. Procédé de n'importe lesquelles des revendications 10 à 13, incluant :
le suivi de la localisation du véhicule et la transmission de la localisation du véhicule au serveur distant et/ou à une localisation distante spécifiée, dans lequel la localisation du véhicule est transmise en continu ou à des moments ou intervalles de temps prédéterminés.

15. Procédé de n'importe lesquelles des revendications 10 à 14, incluant :
la détection de la durée pendant laquelle le véhicule a tourné au ralenti et l'invalidation du moteur de véhicule s'il a été déterminé que le véhicule a tourné au ralenti pendant une quantité de temps prédéterminée.
